# EUROPÄISCHE PATENTSCHRIFT

(11) **EP 3 059 117 B1**
(45) Veröffentlichungstag und Bekanntmachung des Hinweises auf die Patenterteilung: **03.04.2019**
(21) Anmeldenummer: 16000414.9
(22) Anmeldetag: 19.02.2016
(51) Int. Cl.: B60N 2/815, B60N 2/818, B60N 2/894

(54) **KOPFSTÜTZE**
HEADREST
APPUIE-TETE

(30) Priorität: 20.02.2015 DE 102015001995; 19.05.2015 DE 102015006340; 08.09.2015 DE 102015011477
(43) Veröffentlichungstag der Anmeldung: 24.08.2016
(73) Patentinhaber: GRAMMER AG, 92224 Amberg (DE)
(72) Erfinder: Hoffmann, Markus, 92245 Kümmersbruck (DE)
(74) Vertreter: Roche, von Westernhagen & Ehresmann

(56) Entgegenhaltungen:
- WO-A1-2013/081404
- DE-A1- 10 312 517
- DE-A1-102011 005 590
- DE-T5-112014 000 095
- JP-A- 2009 125 398

## Beschreibung

Die Erfindung betrifft eine Kopfstütze für einen Sitz, insbesondere für einen Fahrzeugsitz.

Die Kopfstütze umfasst wenigstens eine Tragstange und ein Basisteil, welchem eine Kopfanlagefläche unmittelbar oder mittelbar zugeordnet ist. Mit der Tragstange ist das Basisteil an einem Sitz gelagert, wobei die Tragstange in einem sitzfesten Lager gehalten ist und das Basisteil auf der Tragstange gelagert ist. Das Basisteil ist relativ zu der Tragstange vertikal verstellbar. Vertikal verstellbar bedeutet im Sinne der Erfindung, dass die Stellbewegung vertikale Anteile aufweist. Die Bewegung muss nicht zwingend rein vertikal sein.

Mittels einer Verriegelungsvorrichtung kann die Kopfstütze in unterschiedlichen Höhenpositionen in wenigstens eine Richtung arretiert werden. An dem Basisteil ist dafür ein Schieber geführt, welchem erste Haltemittel zugeordnet sind. Die ersten Haltemittel wirken mit zweiten Haltemitteln zusammen, die der Tragstange zugeordnet sind. Wenn die Verriegelungsvorrichtung in einer Arretierposition angeordnet ist, befinden sich die ersten und die zweiten Haltemittel in Eingriff. Befindet sich die Verriegelungsvorrichtung in einer Löseposition, stehen die ersten und die zweiten Haltemittel außer Eingriff.

Eine solche Kopfstütze ist aus offenkundiger Vorbenutzung und z.B. aus den Offenlegungsschriften DE 10 2011 005590 A1 bzw. WO 2013/081404 A1 bekannt.

Es war Aufgabe der Erfindung eine Kopfstütze zu schaffen, bei welcher der Fertigungsaufwand verringert ist. Außerdem war es Aufgabe der Erfindung eine Kopfstütze zu schaffen, die keine störenden Geräusche verursacht ist. Zudem war es Aufgabe der Erfindung eine Kopfstütze mit einer Verriegelungsvorrichtung zu schaffen, bei welcher die Toleranzen groß gewählt werden können.

Die Aufgabe wurde gelöst durch eine Kopfstütze mit den Merkmalen des Anspruchs 1.

Das Basisteil ist verstellbar an der Tragstange gelagert, so dass es in unterschiedliche Höhenpositionen bewegbar ist. Mittels einer Verriegelungsvorrichtung ist das Basisteil in wenigstens einer Position relativ zu der Tragstange arretierbar. Erste Haltemittel der Verriegelungsvorrichtung sind an einem Schieber ausgebildet, der Teil der Verriegelungsvorrichtung ist. Im Sinne der Erfindung bedeutet "an einem Schieber ausgebildet", dass die ersten Haltemittel z.B. einstückig mit dem Schieber ausgebildet sein können oder z.B. an dem Schieber befestigt sein können. Der Schieber ist zwischen einer Arretierposition und einer Löseposition bewegbar an dem Basisteil gelagert. In der Arretierposition ist eine Bewegung des Basisteils in wenigstens eine Verstellrichtung verhindert, während in der Löseposition das Basisteil bewegbar ist. In der Arretierposition kann z.B. eine Bewegung des Basisteils nach oben möglich sein und eine Bewegung nach unten arretiert sein.

Der Schieber bildet z.B. mit dem Basisteil und / oder mit der Tragstange eine Führung und Lagerung bezüglich wenigstens einer Raumrichtung. Der Schieber bildet z.B. wenigstens eine erste Führungsfläche aus, die mit mindestens einer zweiten Führungsfläche des Basisteils oder der Tragstange zusammenwirkt. Z.B. bildet das Basisteil wenigstens eine Führungsfläche für mindestens eine Führungsfläche des Schiebers aus, die an einen in dem Basisteil ausgebildeten Schacht für den Schieber angrenzt. Die zusammenwirkenden Führungsflächen des Schiebers und des Basisteils können eine Bewegung des Schiebers in wenigstens eine Richtung verhindern und eine Bewegung des Schiebers in wenigstens eine Raumrichtung ermöglichen. Der Schieber kann z.B. in dem Schacht gleitgelagert sein und auf diese Weise zwischen der Arretierposition und der Löseposition bewegbar gelagert sein.

Darüber hinaus kann der Schieber z.B. wenigstens eine Führungsfläche aufweisen, die mit mindestens einer Führungsfläche der Tragstange in Kontakt steht. Der Schieber umgreift die Tragstange z.B. wenigstens teilweise, wobei wenigstens eine Führungsfläche des Schiebers mit der Oberfläche der Tragstange in Kontakt steht. Die Tragstange durchgreift z.B. eine Aussparung, insbesondere ein Langloch, des Schiebers. Die Aussparung bzw. das Langloch kann z.B. Führungsflächen bereitstellen, die mit der Oberfläche der Tragstange in Kontakt stehen.Eine Laibung des Langlochs steht z.B. mit der Tragstange in Kontakt. Das Langoch kann z.B. eine Bewegung des Schiebers in eine erste Richtung ermöglichen und in eine zweite Richtung verhindern. Z.B. liegen zwei gegenüberliegende Führungsflächen des Langlochs an der Tragstange an und verhindern eine Bewegung in die zweite Richtung.

Die Führungsflächen sind z.B. wenigstens bereichsweise von Rippen oder von Kontaktpunkten gebildet. Alternativ oder zusätzlich kann z.B. wenigstens ein Bereich der Führungsflächen so ausgebildet sein, dass er großflächig an dem Schieber anliegt.

Die Führung bildet z.B. zwischen dem Schieber und dem Basisteil und / oder zwischen dem Schieber und der Tragstange eine Übermaßpassung aus. Die Tragstange hat z.B. in Bezug auf die gegenüberliegenden Führungsflächen des Langlochs des Schiebers ein Übermaß, so dass die Führungsflächen an der Tragstange anliegen. Z.B. hat der Schieber Übermaß in Bezug auf die Führung des Basisteils.

Wenigstens eine der Führungsflächen des Basisteils und / oder des Schiebers ist z.B. elastisch ausgebildet und kann sich bei einer Übermaßpassung elastisch verformen.

Die erste oder die zweite Führungsfläche ist z.B. zumindest teilweise einem Steg zugeordnet, welcher elastisch in einen benachbart ausgebildeten Ausweichraum hinein verformbar ist. Bei einer Führung zwischen dem Schieber und dem Basisteil und / oder zwischen dem Schieber und der Tragstange kann sich der Steg elastisch verformen. Der Steg kann z.B. eine Laibung der Aussparung bilden. Der Ausweichraum kann von einem Hohlraum gebildet sein. Auf diese Weise wird der Schieber zumindest in Bezug auf eine Raumrichtung spielfrei an der Tragstange und / oder an dem Basisteil geführt.

Es kann so z.B. eine Übermaßpassung gewählt werden und Form- und Lageabweichungen aufgrund von Fertigungstoleranzen können auf diese Weise ausgeglichen werden, so dass der Schieber zumindest in Bezug auf eine Bewegungsrichtung kein Spiel hat.

Eine der zusammenwirkenden Führungsflächen kann einen Vorsprung ausbilden, der mit der anderen Führungsfläche in Kontakt steht. Es können z.B. von mehreren Seiten oder in unterschiedliche Raumrichtungen gerichtete Vorsprünge in einen Schacht oder eine Führungsbahn des Basisteils ragen, so dass der Schieber in mehreren Raumrichtungen spielfrei geführt ist.

Z.B. umfasst der Steg wenigstens einen Vorsprung, welcher der jeweils anderen Führungsfläche zugewandt ist. In diesem Fall steht der Vorsprung mit der anderen Führungsfläche in Kontakt.

Gemäß einer Ausführungsform, weist das Basisteil einen Schacht auf. Der Schacht bildet eine Führungsbahn für den Schieber, auf welcher der Schieber zwischen der Arretierposition und der Löseposition bewegbar ist. Der Schacht ist z.B. an das Basisteil angeformt. In dem Schacht ist der Schieber z.B. schubladenartig translatorisch bewegbar. Zur Montage kann der Schieber z.B. einfach in den Schacht eingesteckt werden.

Grundsätzlich kann der Schieber derart an dem Basisteil gelagert sein, dass zumindest in eine Raumrichtung, z.B. Raumrichtung z, Kräfte von dem Basisteil auf den Schieber übertragbar sind. Diese Kräfte können dann von dem Schieber auf die Tragstange übertragen werden. Der Schieber ist z.B. in eine erste Raumrichtung bewegbar und in eine zweite und eine dritte Raumrichtung nicht bewegbar an dem Basisteil gelagert. Es können dann in der zweiten und dritten Richtung Kräfte von dem Basisteil auf den Schieber übertragen werden.

Die Kopfstütze weist erfindungsgemäß eine Handhabe auf. Handhabe ist im Sinne der Erfindung jede Betätigung, mittels welcher der Benutzer von außen die Verriegelungsvorrichtung zwischen der Arretierposition und der Löseposition bewegen kann. Die Handhabe kann z.B. von einer Taste gebildet sein.

Die Handhabe der Verriegelungsvorrichtung ist erfindungsgemäß mittels eines Gelenks an dem Schieber angelenkt. Das Gelenk weist z.B. ein erstes Gelenkteil auf, welches der Handhabe zugeordnet ist und ein zweites Gelenkteil, welches dem Schieber zugeordnet ist. Das erste Gelenkteil und das zweite Gelenkteil sind z.B. miteinander verrastbar und bilden dann eine formschlüssige Verbindung. Ein Gelenkteil kann z.B. von einem Hohlzylinder gebildet sein, in welchem das andere Gelenkteil, welches als Kreiszylinder oder Hohlzylinder ausgebildet ist, konzentrisch gelagert ist. Der äußere Hohlzylinder kann z.B. C-förmig ausgebildet sein und zwei elastische Arme bilden, die zur Montage des inneren Zylinders oder Hohlzylinders aufspreizbar sind. Gemäß einer alternativen Ausführungsform kann ein Gelenkteil als Kugelkalottensegment und das andere Gelenkteil als Kugelsegment ausgebildet sein. Mit einem Gelenk können Unterschiede in der Relativposition zwischen Handhabe und Schieber ausgeglichen und größere Toleranzen gewählt werden.

Der Schieber weist z.B. eine Anlagefläche auf, die in der Arretierposition mit einer Oberfläche der Tragstange in Kontakt steht und derart relativ zu den ersten Haltemitteln angeordnet ist, dass die ersten Haltemittel nur soweit in die Kerbe hineinbewegbar sind, dass sie in der Arretierposition außer Kontakt mit einer Kerbengrundfläche stehen. Die Anlagefläche ist z.B. von einem Vorsprung an dem Schieber gebildet.

Weitere Vorteile der Erfindung ergeben sich anhand eines in den Figuren dargestellten Ausführungsbeispiels. Nachfolgend sind schematische Fig. beschrieben. Es zeigen:
Fig. 1a eine perspektivische Darstellung der Kopfstütze von vorne, wobei sitzfeste Lageraufnahmen zur Lagerung der Tragstangen nicht dargestellt sind,
Fig. 1b eine Explosionsdarstellung der Kopfstütze,
Fig. 1c eine Frontansicht der Kopfstütze gemäß Fig. 1a, wobei die Verriegelungsvorrichtung in der Arretierposition angeordnet ist,
Fig. 2a eine Schnittdarstellung gemäß Schnittlinie IIa - IIa in Fig. 2c,
Fig. 2b eine perspektivische, transversal geschnittene Darstellung der Kopfstütze gemäß Fig. 2a
Fig. 3 ein Ausschnitt gemäß Ausschnittlinie III in Fig. 2,
Fig. 4a ein Ausschnitt aus einer Seitenansicht des Basisteils gemäß Ansichtspfeil IVa in Fig. 2a,
Fig. 4b eine perspektivische Seitenansicht des Ausschnitts gemäß Fig. 4a,
Fig. 5 eine Schnittdarstellung durch eine Handhabe zur Betätigung des Schiebers,
Fig. 6 eine Schnittdarstellung gemäß Schnittlinie VI - VI in Fig. 7,
Fig. 7 ein frontale Darstellung des Schiebers und der Tragstangen der Kopfstütze in der Arretierposition der Verriegelungsvorrichtung,

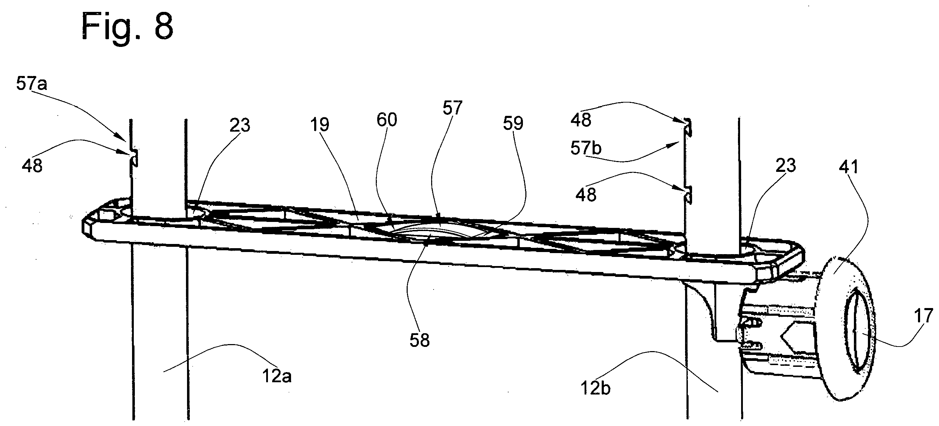

Fig. 8, eine perspektivische Ansicht des Schiebers, der Tragstangen und der Handhabe,
Fig. 9, eine perspektivische rückwärtige Ansicht der Kopfstütze, wobei das Polster nicht dargestellt ist,
Fig. 10a in Anlehnung an Fig. 4a den Ausschnitt einer Seitenansicht bei einer zweiten Ausführungsform der Kopfstütze,
Fig. 10b eine perspektivische Ansicht des Ausschnitts gemäß Fig. 10a, und
Fig. 10c in Anlehnung an Fig. 5 eine Schnittdarstellung der zweiten Ausführungsform.

Die Kopfstütze insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

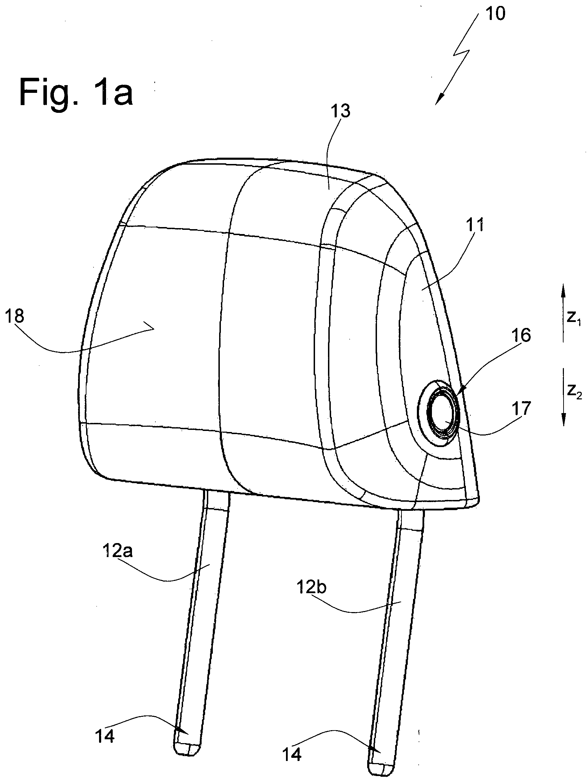

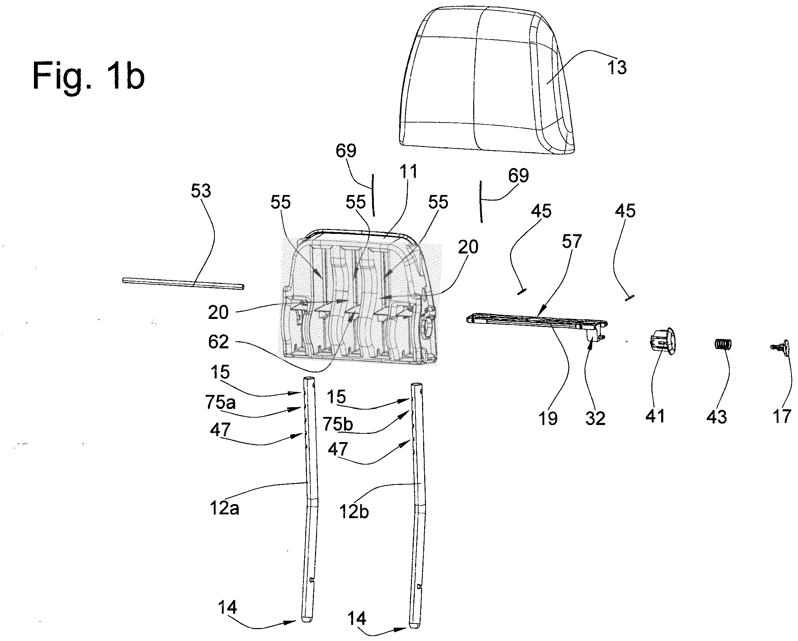

In Fig. 1a ist die perspektivische Ansicht eines Basisteils 11 der Kopfstütze 10 zu erkennen. Die Kopfstütze 10 umfasst Tragstangen 12a und 12b auf welchen das Basisteil 10 gelagert ist. Das Basisteil 11 ist mit einem Polster 13 versehen. Ein unterer Endbereich 14 der Tragstangen 12a und 12b ist fest in nicht dargestellten Lagern eines Fahrzeugsitzes gehalten. Ein oberer Endbereich 15 (siehe Fig. 1b) jeder Tragstange 12a und 12b ist in einem Lager des Basisteils 11 aufgenommen.

Das Basisteil 11 ist relativ zu den Tragstangen 12a und 12b in Richtung z1 und z2 verstellbar. Mittels einer Verriegelungsvorrichtung 16, die zwischen einer Arretierposition und einer Löseposition verstellbar ist, kann das Basisteil 11 in unterschiedlichen Höhenpositionen arretiert werden. Die Verriegelungsvorrichtung 16 umfasst eine Handhabe 17 in Form einer Taste, die außen am Basisteil 11 bedienbar ist. Das Basisteil 11 bildet eine Kopfanlagefläche 18 zur Anlage und als Widerlager für den Kopf eines nicht dargestellten Sitzinsassen aus.

In Fig. 1b ist eine Explosionsdarstellung der Kopfstütze 10 gezeigt, in welcher die Einzelteile der Kopfstütze 10 zu erkennen sind.

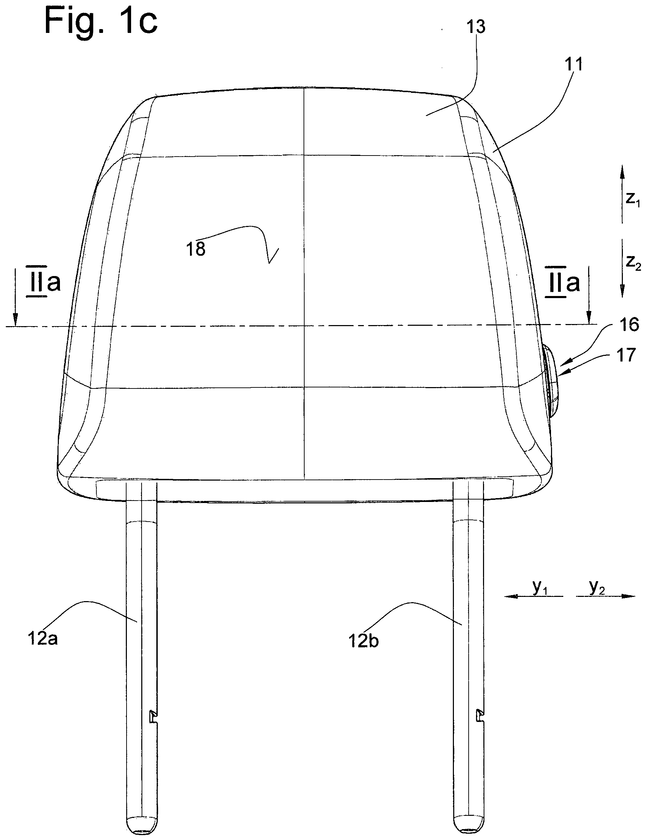

Fig. 1c zeigt eine Frontansicht der Kopfstütze 10. Die Handhabe 17 zur Betätigung der Verriegelungsvorrichtung 16 ist bei dem vorliegenden Ausführungsbeispiel auf der linken Seite des Basisteils 11 angeordnet, weil die Kopfstütze für den Fahrersitz bestimmt ist. Bei einer Kopfstütze für den Beifahrersitz kann die Handhabe 17 gemäß einem anderen Ausführungsbeispiel auch auf der rechten Seite des Basisteils 11 angeordnet sein.

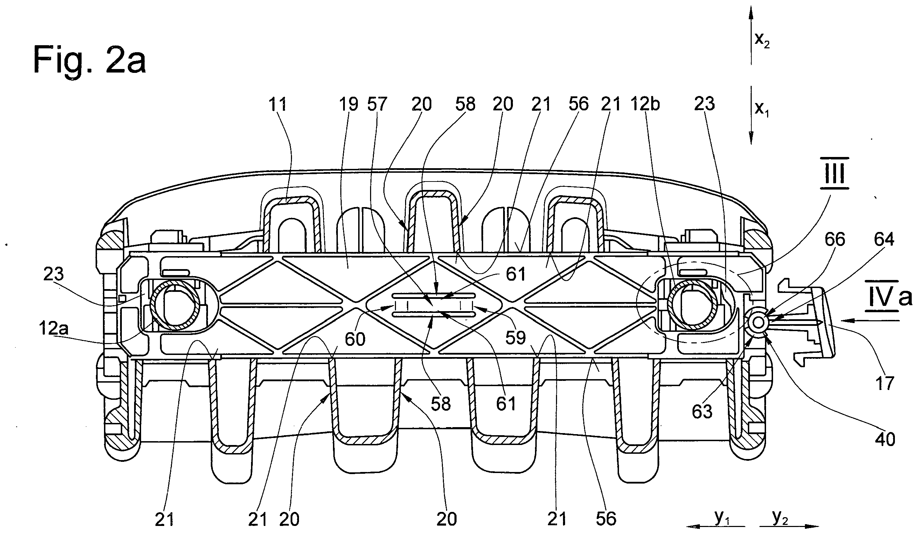

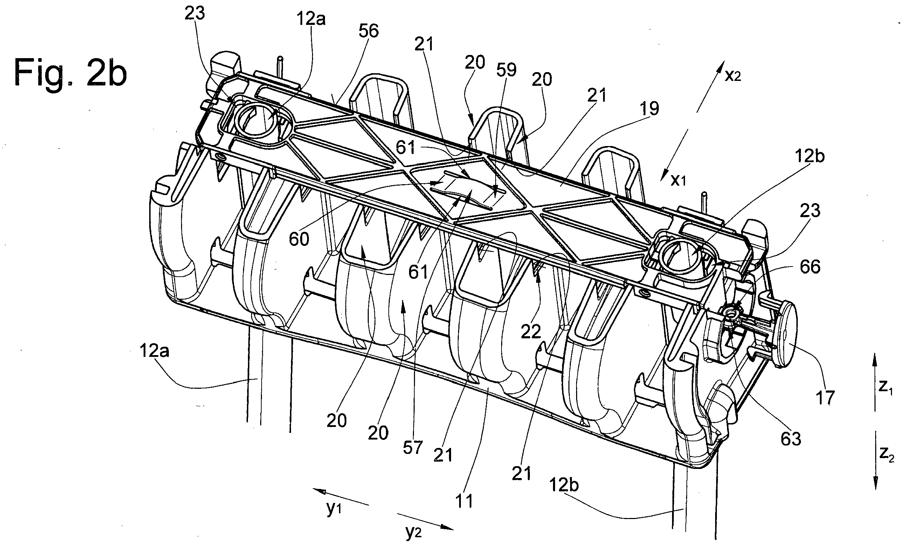

Fig. 2a zeigt eine Schnittansicht durch das Basisteil 11. Das Polster 13 ist nicht dargestellt. Ein Schieber 19 der Verriegelungsvorrichtung 16 ist von Rippen 20 des Basisteils 11 derart geführt, dass er zwischen einer in Fig. 2 dargestellten Arretierposition und einer nicht dargestellten Löseposition der Verriegelungsvorrichtung 16 in die Richtungen y1 und y2 bewegbar ist. Der Schieber 19 ist, insbesondere von einer Feder, in Richtung y2 in die Arretierposition belastet. Mit der Handhabe 17 kann der Schieber 19 in Richtung y1 in die Löseposition verstellt werden.

Die Rippen 20 sind derart ausgespart, dass ein Schacht 22 gebildet ist. Führungsflächen 21 des Basisteils 11 sind dem Schacht 22 zugewandt und wirken mit Außenflächen 56 des Schiebers 19 zusammen. Der Schieber 19 ist derart in dem Schacht 22 gelagert, dass er in die Richtungen x1 und x2 sowie z1 und z2 im Wesentlichen nicht bewegbar ist (d.h. lediglich im Rahmen eines Spiels bewegbar ist), während er in Richtungen y1 und y2 bewegbar ist.

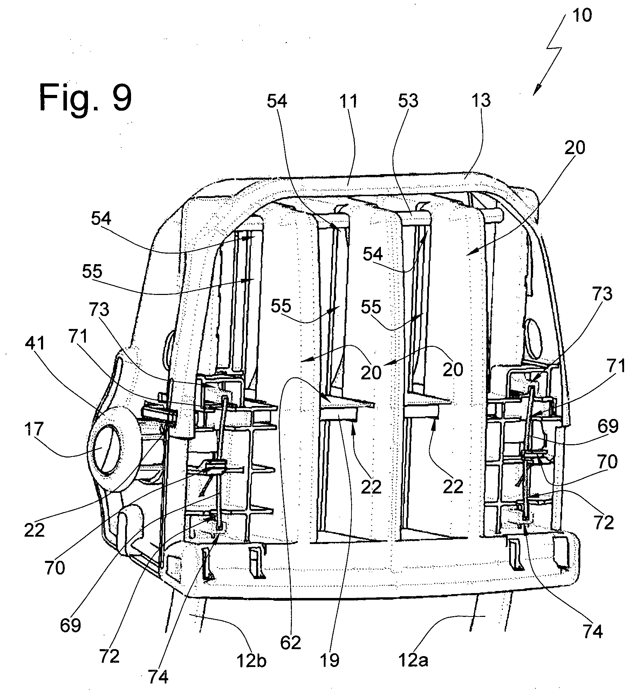

Zum Spielausgleich in Richtung z1, z2 umfasst der Schieber 19 einen Federsteg 57, der von einem in Richtung z1 vorgewölbten Bereich des Schiebers 19 gebildet ist. Der vorgewölbte Bereich ist zwischen zwei Langlöchern 58 angeordnet, so dass der vorgewölbte Bereich einen Steg bildet, welcher an Endbereichen 59 und 60 mit dem Schieber verbunden ist. Seitenbereiche 61 sind durch die Langlöcher 58 von dem Schieber 19 getrennt, so dass sich der Federsteg 57 in Richtung z2 entgegen seiner federelastischen Rückstellkraft elastisch verformen kann. Der Federsteg 57 steht mit einer den Schacht 22 begrenzenden Fläche 28 einer oberen Wand 62 (siehe die Fig. 1b und 9) in Kontakt. Der Federsteg 57 belastet den Schieber 19 in Richtung z2 gegen eine untere Führungsfläche des Schachts 22.

Der Schieber 19 umfasst gemäß Fig. 2a zwei Aussparungen 23, welche die Form eines Langlochs aufweisen. Die Tragstange 12a durchgreift eine der Aussparungen 23, die Tragstange 12b durchgreift eine andere Aussparung 23.

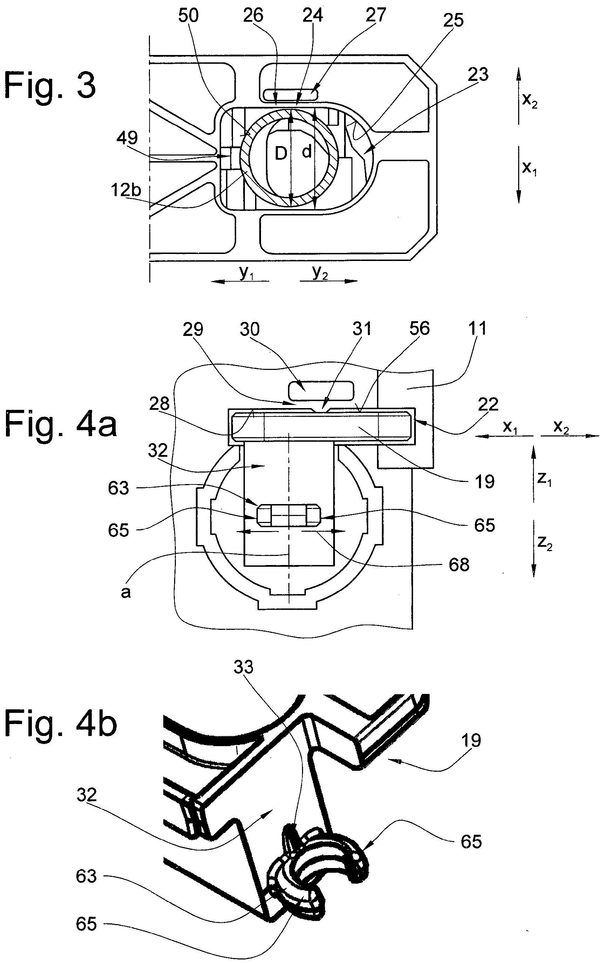

In Fig. 3 ist ein vergrößerter Ausschnitt aus der Darstellung gemäß Fig. 2a gezeigt. Ein Außendurchmesser D der Tragstange 12b weist in Bezug auf den Innendurchmesser d der Aussparung 23 ein leichtes Übermaß auf. Ein Bereich 24 einer Außenfläche 25 der Aussparung 23 ist einem Steg 26 zugeordnet, welcher zwischen der Außenfläche 25 und einer Aussparung 27 in dem Schieber 19 gebildet ist. Der Steg 26 ist elastisch verformbar und kann sich elastisch in die Aussparung 27 verformen. Auf diese Weise liegt der Schieber 19 trotz maßtoleranzbedingter Form- und Lageabweichungen des Basisteils 11 und / oder des Schiebers 19 und / oder der Tragstangen 12a und 12b immer ohne Spiel bezüglich der Richtungen x1 und x2 an der Tragstange 12b an.

In den Fig. 4a und 4b ist zu erkennen, dass ein Bereich einer dem Schacht 22 zugewandten Außenfläche 28 des Basisteils 11 einem elastisch verformbaren Steg 29 zugeordnet ist. Der Steg 29 ist durch eine der Außenfläche 28 benachbarte Aussparung 30 gebildet. Der Steg 29 ist mit einem Vorsprung 31 versehen, welcher in den Schacht 22 hineinragt und an der Außenfläche 56 des Schiebers 19 anliegt. Der Schieber 19 ist auf diese Weise trotz fertigungsbedingter Maßtoleranzen des Basisteils 11 sowie des Schiebers 19 spielfrei in dem Schacht 22 bezüglich der Richtungen z1 und z2 geführt.

An einem von dem Schieber 19 in Richtung z2 nach unten ragenden Fortsatz 32 des Schiebers 19 ist ein in Richtung y2 vorragender Vorsprung 33 mit einem Hohlzylindersegment 63 gehalten, dessen Ringmittelachse a senkrecht zur x / y - Ebene ausgebildet ist. Das Hohlzylindersegment 63 weist eine Öffnung 64 auf, so dass es eine C-form mit elastisch nach außen aufspreizbaren Armen 65 bildet, wie durch das Pfeilepaar 68 angedeutet.

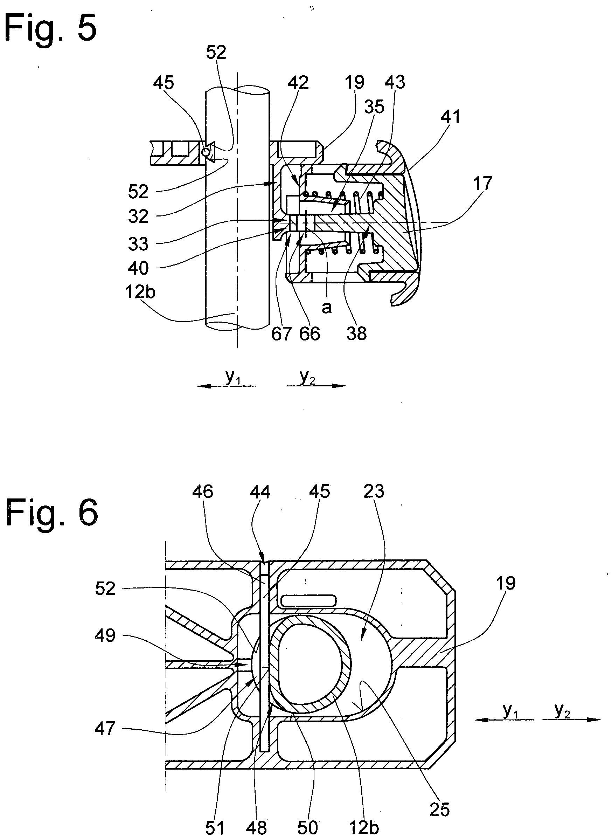

Gemäß Fig. 5 ist die Handhabe 17 in einem Gehäuse 41 in die Richtungen y1 und y2 bewegbar geführt. Das Gehäuse 41 umfasst einen Boden 42, an welchem sich ein Ende der Feder 43 abstützt. Das andere Ende der Feder liegt an der Handhabe 17 an und belastet diese - und damit auch den Schieber 19 - in Richtung y2 in die Arretierposition.

Die Handhabe 17 bildet einen Fortsatz 38 aus, dessen freies Ende als Zylindersegment 66 geformt ist. Das Zylindersegment 66 ist in dem Hohlzylindersegment 63 angeordnet und bildet mit diesem ein Gelenk 67. Zwischen dem Zylindersegment 66 und dem Hohlzylindersegement 63 ist eine begrenzte Bewegung in Richtung x1, x2 sowie in Richtung z1, z2 möglich. Maßabweichungen aufgrund von Form- und Lagetoleranzen zwischen der Position des Schiebers 19 sowie der Position der Handhabe 17 können so ausgeglichen werden.

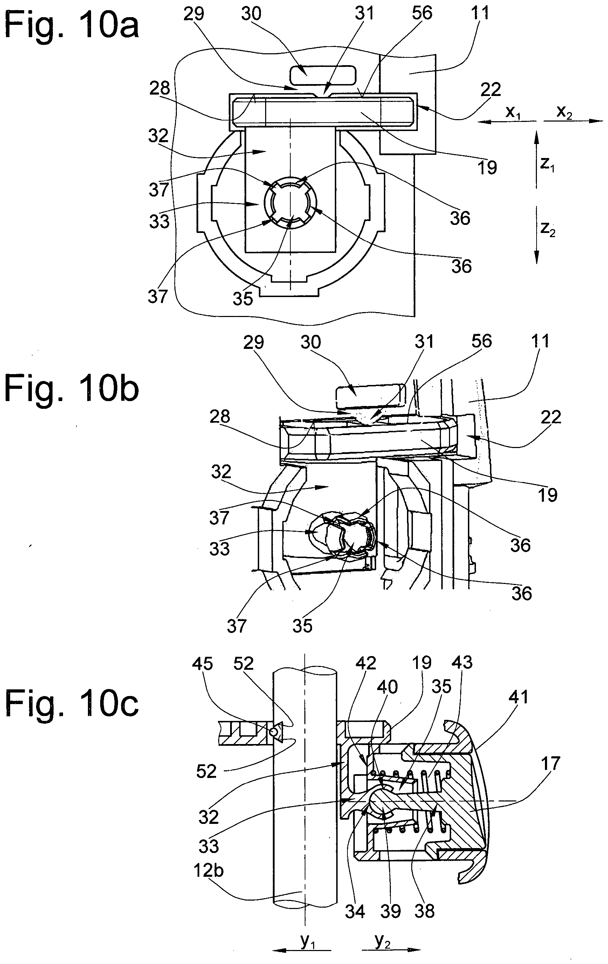

Gemäß einer alternativen Ausführungsform kann an dem Vorsprung 33 ein Kugelkalottensegment 34 mit einem Hohlraum ausgebildet sein (siehe die Fig. 10a bis 10c). An einem freien Ende ist das Kugelkalottensegment 34 mit einer Öffnung 35 versehen. Der Öffnung 35 benachbarte Bereiche des Kugelkalottensegments 34 weisen elastisch verformbare Arme 36 auf zwischen denen Aussparungen 37 gebildet sind. Die Arme 36 sind radial elastisch verformbar, so dass die Öffnung, welche den Zugang zu dem Hohlraum bildet, durch elastische Verformung der Arme 36 vergrößerbar ist.

Das freie Ende des Fortsatzes 38 der Handhabe 17 ist in diesem Fall als Kugelsegment 39 geformt. Das Kugelsegment 39 ist in dem Kugelkalottensegment 34 angeordnet und bildet mit diesem ein Kugelgelenk 40. Mit dem Kugelgelenk 40 können Maßabweichungen aufgrund von Form- und Lagetoleranzen in Richtung x1, x2, und / oder z1, z2 zwischen der Position des Schiebers 19 sowie der Position der Handhabe 17 ausgeglichen werden.

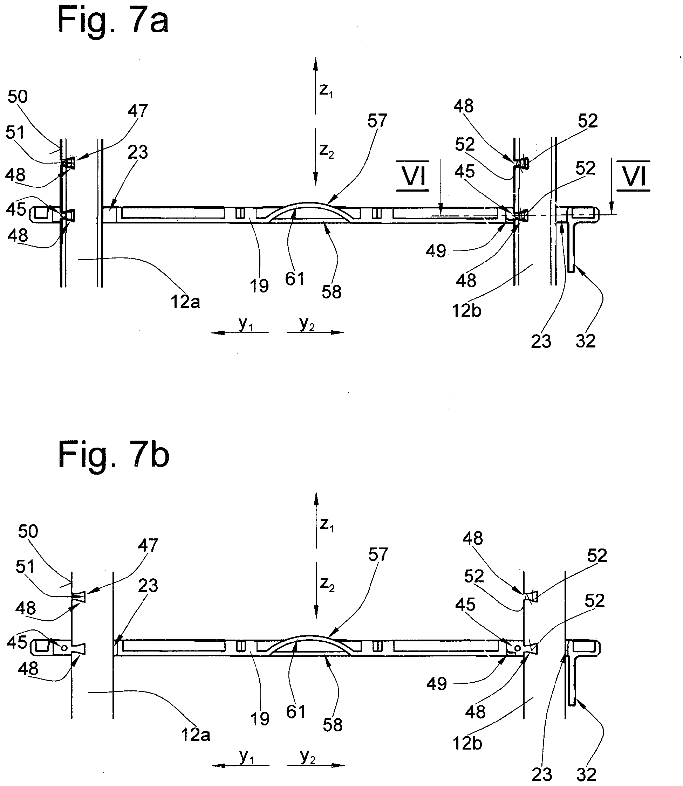

In Aussparungen 44 des Schiebers 19 sind erste Haltemittel 46 in Form von Verriegelungsstiften 45 quer zur Bewegungsrichtung y1 und y2 des Schiebers 19 angeordnet (siehe z.B. die Fig. 6 und 7). Die Aussparungen 44 sind komplementär zu der Mantelfläche des zylindrischen Verriegelungsstiftes 45 ausgebildet, so dass keine Relativbewegung zwischen dem Verriegelungsstift 45 und dem Schieber 19 in die Richtungen y1 und y2 sowie z1 und z2 stattfinden kann. Die Passung des Verriegelungsstiftes 45 ist derart gewählt, dass sich der Verriegelungsstift 45 nicht unbeabsichtigt aus der Aussparung 44 hinausbewegen kann. Kräfte, die auf das Basisteil 11 wirken, können von dem Verriegelungsstift 45 des Schiebers 19 auf die Tragstangen 12a und 12b übertragen werden.

Gemäß Fig. 1b weist die Tragstange 12a eine Anordnung 75a und die Tragstange 12b eine Anordnung 75b von zweiten Haltemitteln 47 auf, welche von Kerben 48 gebildet sind. Die beiden Verriegelungsstifte 45 des Schiebers 19 befinden sich in der Arretierposition des Schiebers 19 in Eingriff mit einer Kerbe 48 (siehe z.B. die Fig. 7a). In der Löseposition gemäß Fig. 7b sind die Verriegelungsstifte 45 nicht in Eingriff mit einer der Kerben 48. In Fig. 6 ist erkennbar, dass von der Außenfläche 25 der Aussparung 23 ein Vorsprung 49 in Richtung y2 in die Aussparung 23 vorragt. Der Vorsprung 49 ist lediglich in einer der Aussparungen 23 ausgebildet. Der Vorsprung 49 ist derart zu dem Verriegelungsstift 45 angeordnet, dass er in der Arretierposition an einer Oberfläche 50 der Tragstange 12b anliegt und verhindert, dass sich der Schieber 19 soweit in Richtung y2 bewegen kann, bis der Verriegelungsstift 45 mit einer Kerbengrundfläche 51 in Kontakt gerät. Mit Hilfe des Vorsprungs 49 wird somit beim Einrasten des Verriegelungsstiftes 45 ein Geräusch verhindert.

Trotz des Kontaktes des Vorsprungs 49 mit der Oberfläche 50 ist der Verriegelungsstift 45 in der Arretierposition derart in der Kerbe 48 angeordnet, dass der Verriegelungsstift 45 in Kontakt mit wenigstens einer Riegelfläche 52, welche eine Bewegung des Basisteils 11 in Richtung z1 und / oder in Richtung z2 verhindert. Im vorliegenden Ausführungsbeispiel ist die Kerbe 48 mit zwei sich gegenüberliegenden Riegelflächen 52 versehen, wodurch eine Bewegung des Basisteils 11 in Richtung z1 und z2 verhindert wird. Gemäß einer alternativen, nicht dargestellten Ausführung könnte die Kerben auch lediglich eine Riegelfläche 52 und dafür eine Schrägfläche aufweisen, wobei durch den Kontakt des Verriegelungsstiftes 45 mit der Schrägfläche der Schieber 19 in Richtung y1 in die Löseposition bewegt wird. In diesem Fall wäre in der Arretierposition lediglich eine Bewegung in Richtung z2 blockiert, eine Bewegung in Richtung z1 hingegen möglich.

In Fig. 9 ist eine perspektivische Ansicht des Basisteils 11 von hinten gezeigt. Zur Lagerung des Basisteils 11 an den Tragstangen 12a und 12b sind an dem Basisteil 11 Führungshülsen 76a und 76b angeformt. In der Führungshülse 76a ist die Tragstange 12a aufgenommen ist und in der Führungshülse 76b ist die Tragstange 12b aufgenommen. Mittels der Führungshülsen 76a und 76b kann das Basisteil 11 gleitend auf den Tragstangen 12a und 12b in die Richtungen z1 und z2 bewegt werden. Der Führungshülse 76a ist eine Feder 69a und der Führungshülse 76b ist eine Feder 69b zugeordnet. Jede Feder 69a und 69b ist mit einer Halterung 70 an dem Basisteil 11 befestigt.

Die Feder 69a umfasst einen oberen freien Endbereich 71 sowie einen unteren freien Endbereich 72. Der obere freie Endbereich 71 steht mit einem Führungselement 73 in Kontakt und belastet dieses in Richtung x1 gegen die Tragstange 12a. Der untere freie Endbereich 72 wirkt mit einem Führungselement 74 zusammen und belastet dieses in Richtung x1 gegen die Tragstange 12a. Die Feder 69b wirkt in gleicher Weise mit Führungselementen 73 und 74 zusammen und belastet diese in Richtung x1 gegen die Tragstange 12b. Die Führungselemente 73 und 74 sind an dem Basisteil 11 gehalten und sind derart beweglich ausgebildet, dass sie in Kontakt mit der Tragstange 12a und 12b bewegt werden können. Mittels der Federn 69a und 69b wird das Basisteil 11 derart in Richtung x2 belastet, dass die Tragstangen 12a und 12b in Kontakt mit einer Innenwand der jeweiligen Führungshülse 76a bzw. 76b gehalten werden.

Nachfolgend wird die Montage der Kopfstütze 10 beschrieben (siehe Fig. 2).

Nach der Montage der Verriegelungsstifte 45 in den Aussparungen 44, wird in den Schacht 22 des Basisteiles 11 der Schieber 19 in Richtung y1 eingeschoben. Anschließend werden die Tragstangen 12a und 12b in die Führungen 76a und 76b des Basisteils 11 eingesetzt, so dass sie die Aussparungen 23 des Schiebers 19 durchgreifen. Schließlich wird eine Traverse 53 durch Öffnungen und Langlöcher 55 des Basisteils 13 geführt und Enden der Traverse 53 werden an den oberen Endbereichen 15 der Tragstangen 12a und 12b befestigt. Die Befestigung kann z.B. von einer Schweißverbindung, einer Taumelnietverbindung oder anderen üblichen Verbindungen gebildet sein.

Anschließend wird das Polster 13 auf dem Basisteil 11 montiert. Das Gehäuse 41, die Feder 43 und die Handhabe 17 werden vormontiert und als Baugruppe an dem Basisteil 11 befestigt, indem das Zylindersegment 63 mit dem Hohlzylindersegment 63 verrastet wird. Dabei wird das Zylindersegment 63 durch die Öffnung 64 in den Eingriff mit dem Hohlzylindersegment 63 bewegt, wobei sich die Arme 65 aufspreizen, wie durch das Pfeilepaar 68 angedeutet. Wenn das Zylindersegment 63 in seinem Sitz angeordnet ist, hintergreifen die Arme 36 das Zylindersegment 63. Zwischen dem Zylindersegment 63 und dem Hohlzylindersegment 63 ist ein Gelenk 67 gebildet, welches ermöglicht, dass die Handhabe 17 in Bezug auf ihre Soll-Position geringfügig in Richtung z1 oder z2 und / oder in Richtung x1 oder x2 relativ zu dem Schieber versetzt angeordnet sein kann.

Die Funktion der Kopfstütze 10 soll nachfolgend erläutert werden. Gemäß Fig. 9 ist das Basisteil 11 in der untersten Position angeordnet. Die Traverse 53 befindet sich in einem oberen Bereich 54 von den Langlöchern 55 die in den Rippen 20 des Basisteils 11 ausgebildet sind. Soll das Basisteil 11 aus der untersten Position nach oben bewegt werden, ist zunächst durch einen Druck auf die Handhabe 17 die Verriegelungsvorrichtung 16 aus der Arretierposition in die Löseposition zu verstellen.

In der Arretierposition ist der Schieber 19 wie z.B. in Fig. 7 gezeigt angeordnet. Die Verriegelungsstifte 45 sind in Eingriff mit den Kerben 48, so dass eine Bewegung des Basisteils 11 in die Richtungen z1 und z2 durch die sich gegenüberliegenden Riegelflächen 52 der Kerben 48 verhindert wird.

Aufgrund der Betätigung bewegt sich die Handhabe 17 entgegen der Kraft der Feder 43 in Richtung y1. Über das Gelenk 67 wird auch der Schieber 19 in Richtung y1 in die Löseposition bewegt. In der Löseposition (siehe Fig. 7b) ist der Schieber 19 bezüglich der in Fig. 7 dargestellten Position in Richtung y1 bewegt, wobei die Verriegelungsstifte 45 außer Eingriff mit der Kerbe 48 sind. Das Basisteil 11 kann nun in Richtung z2 bewegt werden.

Sobald die gewünschte Höhenposition erreicht ist, kann der Druck auf die Handhabe 17 nachgelassen werden. Die Handhabe 17 wird dann von der Feder 43 in Richtung y2 bewegt, wobei auch der Schieber 19 in Richtung y2 bewegt wird. Dabei wird der Verriegelungsstift 45 je nach der Höhenposition des Basisteils 11 gegen die Oberfläche 50 der Tragstange 12a bzw. 12b bzw. in Eingriff mit der Kerbe 48 belastet und rastet in eine der Kerben 48 ein. Die Verriegelungsvorrichtung 16 befindet sich dann wieder in der Arretierposition. In der Arretierposition liegt der Vorsprung 49 an der Oberfläche 50 der Tragstange 12b an und verhindert, dass sich der Verriegelungsstift 45 in Kontakt mit der Kerbengrundfläche 51 bewegt (siehe die Fig. 3 und 6). Zwischen dem Verriegelungsstift 45 und der Kerbengrundfläche 51 ist in der Arretierposition ein Spalt gebildet.

## Patentansprüche

1. Kopfstütze für einen Sitz, insbesondere für einen Fahrzeugsitz, mit einer Tragstange (12a, 12b) und einem Basisteil (11), welches mit wenigstens der Tragstange (12a, 12b) an dem Sitz lagerbar ist und relativ zu der Tragstange verlagerbar ist, mit einer zwischen einer Arretierposition und einer Löseposition bewegbaren Verriegelungsvorrichtung (16), mittels welcher das Basisteil in wenigstens einer Position relativ zu der Tragstange arretierbar ist, wobei die Verriegelungsvorrichtung erste Haltemittel (46) aufweist, die dem Basisteil (11) zugeordnet sind und zweite Haltemittel (47) aufweist, die der Tragstange (12a, 12b) zugeordnet sind, wobei die ersten Haltemittel an einem Schieber (19) ausgebildet sind, der bewegbar an dem Basisteil (11) gelagert ist, derart dass in der Arretierposition die ersten Haltemittel und die zweiten Haltemittel in Eingriff stehen und in der Löseposition außer Eingriff stehen, **dadurch gekennzeichnet, dass** eine Handhabe (17) der Verriegelungsvorrichtung (16) mittels eines Gelenks (40) an dem Schieber (19) angelenkt ist.

2. Kopfstütze nach Anspruch 1, **dadurch gekennzeichnet, dass** der Schieber (19) mit dem Basisteil (11) und / oder mit der Tragstange (12a, 12b) eine Führung in wenigstens einer Raumrichtung (x1, x2, z1, z2) bildet.

3. Kopfstütze nach Anspruch 2, **dadurch gekennzeichnet, dass** die Führung zwischen dem Schieber (19) und der Tragstange (12a, 12b) und / oder zwischen dem Schieber (19) und dem Basisteil (11) eine Übermaßpassung ausbildet.

4. Kopfstütze nach einem der Ansprüche 2 oder 3, **dadurch gekennzeichnet, dass** der Schieber (19) wenigstens eine erste Führungsfläche (56) ausbildet, die mit wenigstens einer zweiten Führungsfläche (21, 28, 50) des Basisteils (11) und / oder der Tragstange (12a, 12b) in Kontakt steht und eine Führung ausbildet.

5. Kopfstütze nach Anspruch 4, **dadurch gekennzeichnet, dass** die erste Führungsfläche oder die zweite Führungsfläche wenigstens teilweise einem elastisch verformbaren Steg (26, 29) zugeordnet ist, welcher in einen benachbart ausgebildeten Ausweichraum (27, 30) hinein verformbar ist.

6. Kopfstütze nach einem der Ansprüche 4 oder 5, **dadurch gekennzeichnet, dass** die erste Führungsfläche oder die zweite Führungsfläche wenigstens einen Vorsprung (31) ausbildet, welcher der jeweils anderen Führungsfläche zugewandt ist.

7. Kopfstütze nach einem der vorangehenden Ansprüche, **dadurch gekennzeichnet, dass** der Schieber (19) die Tragstange (12a, 12b) wenigstens teilweise umgreift.

8. Kopfstütze nach einem der vorangehenden Ansprüche, **dadurch gekennzeichnet, dass** das Basisteil (11) einen Schacht (22) aufweist, in welchem der Schieber (19) zwischen der Arretierposition und der Löseposition bewegbar ist.

9. Kopfstütze nach einem der vorangehenden Ansprüche, **dadurch gekennzeichnet, dass** der Schieber (19) eine Anlagefläche (49) aufweist, welche in der Arretierposition mit einer Oberfläche (50) der Tragstange in Kontakt steht und derart relativ zu den ersten Haltemitteln angeordnet ist, dass die ersten Haltemittel keinen Kontakt mit einer Kerbengrundfläche (51) haben.

## Claims

1. Headrest for a seat, in particular for a vehicle seat, having a supporting rod (12a, 12b) and a base part (11) which can be mounted on the seat by means of at least the supporting rod (12a, 12b) and is displaceable relative to the supporting rod, having a locking device (16) movable between a locked position and a released position by means of which the base part can be locked in at least one position relative to the supporting rod, the locking device having first retaining means (46) co-operating with the base part (11) and second retaining means (47) co-operating with the supporting rod (12a, 12b), and the first retaining means are provided on a slide (19) which is mounted so as to be movable on the base part (11) in such a way that the first retaining means and the second retaining means sit in engagement in the locked position and sit out of engagement in the released position, **characterised in that** an operating means (17) of the locking device (16) is articulatingly linked to the slide (19) by means of a joint (40).

2. Headrest as claimed in claim 1, **characterised in that** the slide (19) together with the base part (11) and/or with the supporting rod (12a, 12b) forms a guide in at least one spatial direction (x1, x2, z1, z2).

3. Headrest as claimed in claim 2, **characterised in that** the guide between the slide (19) and the supporting rod (12a, 12b) and/or between the slide (19) and the base part (11) forms an interference fit.

4. Headrest as claimed in one of claims 2 or 3, **characterised in that** the slide (19) forms at least one first guide surface (56) which sits in contact with at least one second guide surface (21, 28, 50) of the base part (11) and/or of the supporting rod (12a, 12b) and forms a guide.

5. Headrest as claimed in claim 4, **characterised in that** the first guide surface or the second guide surface at least partially co-operates with an elastically deformable web (26, 29) which is able to deform into an adjacently disposed deflection space (27, 30).

6. Headrest as claimed in one of claims 4 or 5, **characterised in that** the first guide surface or the second guide surface forms at least one projection (31) facing the respective other guide surface.

7. Headrest as claimed in one of the preceding claims, **characterised in that** the slide (19) extends at least partially around the supporting rod (12a, 12b).

8. Headrest as claimed in one of the preceding claims, **characterised in that** the base part (11) has a shaft (22) in which the slide (19) is movable between the locked position and the released position.

9. Headrest as claimed in one of the preceding claims, **characterised in that** the slide (19) has a contact surface (49) which sits in contact with a surface (50) of the supporting rod in the locked position and is disposed in such a way relative to the first retaining means that the first retaining means are not in contact with a notch base surface (51).

## Revendications

1. Appuie-tête pour un siège, en particulier pour un siège de véhicule, comportant une tige de support (12a, 12b) et une partie de base (11), qui peut être placée au moins avec la tige de support (12a, 12b) au niveau du siège et qui est mobile par rapport à la tige de support, avec un dispositif de verrouillage (16) mobile entre une position de verrouillage et une position de libération, au moyen duquel la partie de base peut être bloquée dans au moins une position par rapport à la tige de support, le dispositif de verrouillage comprenant des premiers moyens de maintien (46) qui sont associés à la partie de base (11) et des seconds moyens de maintien (47), qui sont associés à la tige de support (12a, 12b), les premiers moyens de maintien étant réalisés au niveau d'un coulisseau (19) qui est monté de façon mobile au niveau de la partie de base (11) de telle sorte que, en position de verrouillage, les premiers moyens de maintien et les seconds moyens de maintien sont en prise, et sont dégagés en position de libération, **caractérisé en ce qu'**un dispositif manuel de manipulation (17) du dispositif de verrouillage (16) est articulé au moyen d'une articulation (40) au niveau du coulisseau (19).

2. Appuie-tête selon la revendication 1, **caractérisé en ce que** le coulisseau (19) forme avec la partie de base (11) et/ou avec la tige de support (12a, 12b) un guide dans au moins une direction spatiale (x1, x2, z1, z2).

3. Appuie-tête selon la revendication 2, **caractérisé en ce que** le guide réalise entre le coulisseau (19) et la tige de support (12a, 12b) et/ou entre le coulisseau (19) et la partie de base (11) un ajustement avec serrage.

4. Appuie-tête selon l'une des revendications 2 ou 3, **caractérisé en ce que** le coulisseau (19) réalise au moins une première face de guidage (56) qui est en contact avec au moins une deuxième face de guidage (21, 28, 50) de la partie de base (11) et/ou la tige de support (12a, 12 b) et réalise un guide.

5. Appuie-tête selon la revendication 4, **caractérisé en ce que** la première face de guidage ou la deuxième face de guidage est associée, au moins en partie, à une barrette (26, 29) élastiquement ductile, qui est déformable dans un espace de dégagement (27, 30) réalisé contigu.

6. Appuie-tête selon l'une des revendications 4 ou 5, **caractérisé en ce que** la première face de guidage ou la deuxième face de guidage réalise au moins une saillie (31) qui est orientée vers l'autre face de guidage respective.

7. Appuie-tête selon l'une des précédentes revendications, **caractérisé en ce que** le coulisseau (19) entoure, au moins en partie, la tige de support (12a, 12b).

8. Appuie-tête selon l'une des précédentes revendications, **caractérisé en ce que** la partie de base (11) comporte un compartiment fermé (22) dans lequel le coulisseau (19) est mobile entre la position de verrouillage et la position de libération.

9. Appuie-tête selon l'une des précédentes revendications, **caractérisé en ce que** le coulisseau (19) comporte une face d'appui (49) laquelle est en contact, dans la position de verrouillage, avec une surface (50) de la tige de support et est disposée par rapport aux premiers moyens de maintien, de telle sorte que les premiers moyens de maintien ne sont pas en contact avec une face de base d'entaille (51).
